# EUROPEAN PATENT APPLICATION

(11) **EP 1 739 130 A1**
(43) Date of publication of application: **03.01.2007**
(21) Application number: 05728874.8
(22) Date of filing: 04.04.2005
(51) Int. Cl.: C08L 69/00, C08K 3/34, C08L 25/04, C08L 27/12, C08L 71/12, C08L 83/04

(54) **FLAME-RETARDANT RESIN COMPOSITION**

(30) Priority: 22.04.2004 JP 2004126539; 22.04.2004 JP 2004126542
(71) Applicant: Kaneka Corporation, Kita-ku Osaka-shi, Osaka 530-8288 (JP)
(72) Inventor: TSUNEISHI, Hiroshi, 5600052, Osaka (JP); MICHINOBU, Takao, 5660072, Osaka (JP)
(74) Representative: Vossius & Partner
(86) International application number: PCT/JP2005/006626
(87) International publication number: WO 2005/103154

(57) **Abstract**

There is provided a novel flame-retardant resin composition capable of expressing extremely high flame retardancy without a flame retardant containing a halogen atom, a phosphorus atom, a nitrogen atom, or the like.

The present invention provides a composition including a thermoplastic resin mixture of an aromatic polycarbonate or the like (A) and an aromatic vinyl resin or the like (B); a silicone compound (C); and a specific metal silicate compound (D), the silicone compound (C) being represented by average chemical formula (1):

R¹ₘR²ₙSiO_{(4-m-m)/2} (1)

(wherein R¹ represents a methyl group or the like; R² represents a phenyl group or the like; and 1.1 ≤ m + n ≤ 1.7 and 0.4 ≤ n/m ≤ 2.5).

## Description

### Technical Field

The present invention relates to a highly flame-retardant resin composition free from halogen, phosphorus, nitrogen atoms, and the like.

### Background Art

Blends of polycarbonate resins and either styrene resins, such as acrylonitrile-butadiene-styrene resins, or polyester resins have high thermal resistance and high impact resistance and thus have been widely used as polymer alloys having improved chemical resistance and flowability in molding for various formed articles, such as automotive, electric, and electronic components. On the other hand, polyphenylene ether resins have advantages of satisfactory dimensional stability, electrical properties, and lightweight properties as well as thermal resistance and thus have been used in similar fields. The resins need to have high flame retardancy when used for electric and electronic components, housings, enclosures, and chassis of office automation (OA) equipment.

To reduce the amount of materials used, it is effective to reduce sizes and thicknesses of components and housings. However, the resin melts, forms molten droplets, and drips from a thin portion of a formed article in burning, resulting in potentially causing the danger of burning of other combustibles. Thus, flame-retardant resin compositions also need to have higher levels of flame retardancy, i.e., the flame-retardant resin compositions without dripping are required.

Usually, halogen compounds or phosphorus compounds are incorporated in polycarbonate resins and polyphenylene ether resins in order to impart flame retardancy thereto. However, the halogen compounds disadvantageously generate corrosive or toxic gases in processing or burning. On the other hand, the phosphorus compounds disadvantageously have low thermal resistance and high volatility, thus generating odors in extrusion and molding and affecting mechanical properties and thermal properties.

It has recently been reported that silicone compounds are effective in imparting flame retardancy to resins each composed of a polycarbonate alone. For example, a silicone compound having an R₂SiO_{1.5} unit and an RSiO_{1.0} unit is disclosed (for example, see Patent Documents 1 and 2), and a silicone compound having a phenyl group, an alkyl group, and an alkoxy group and having a molecular weight of 10,000 or less is disclosed (for example, see Patent Document 3). These silicone compounds are effective for the resins each composed of a polycarbonate alone but have little effect on alloys of polycarbonate resins and either styrene resins or polyester resins.

Methods for imparting flame retardancy to polyphenylene ether resins using silicone compounds are known. For example, a thermoplastic resin composition containing polyorganosiloxane and polyphenylene ether is disclosed (Patent Document 4), and a method for blending a polyphenylene ether resin with either a specific phenylsiloxane fluid or a silicone resin is disclosed (Patent Documents 5 and 6). These silicone compounds impart some flame retardancy to resins each composed of a polyphenylene ether alone but cannot sufficiently impart flame retardancy to a polyphenylene ether resin blended with another resin. That is, polyphenylene ether resins are often used as alloys of the polyphenylene ether resins and aromatic vinyl resins in order to improve flowability. When the above-described silicone compounds alone are incorporated in such alloys, the alloys disadvantageously have low flame retardancy. Some techniques for imparting flame retardancy to the alloys of the polyphenylene ether resins and aromatic vinyl resins by incorporating specific silicone compounds in the alloys have recently been disclosed. For example, a technique in which a silicone resin containing an R₂SiO_{2/2} unit and an RSiO_{3/2} unit is incorporated is disclosed (Patent Documents 7 and 8). However, a test piece having a thickness of 1.6 mm or less does not have high flame retardancy agree with UL-94 V-0 (the Underwriters Laboratories standard, USA).

With respect to techniques for imparting flame retardancy to alloys of polycarbonate resins and either styrene resins or polyester resins and alloys of polyphenylene ether resins and aromatic vinyl resins by the use of silicone compound, silicone resins each having a specific structure containing a SiO₂ unit as a component and silicone resins each having a specific melting properties are disclosed (for example, see Patent Documents 9, 10, 11, and 12). However, it is desirable to further reduce contents of the silicone resins used as flame retardants in view of cost efficiency.

With respect to the effect of imparting flame retardancy using a metal silicate, a flame retardant resin composition containing a polycarbonate resin, a phosphate having a specific cyclic structure, a fluorocarbon resin, and a small amount of talc is disclosed, the ratio by weight of the phosphorus atom in the phosphate to talc being a specific value (for example, see Patent Document 13). Furthermore, the effect of imparting flame retardancy by incorporating a specific amount of a metal silicate in a polycarbonate resin or a polyphenylene ether resin and a technique for additionally incorporating an organic siloxane compound in the composition are disclosed (for example, see Patent Document 14). However, the incorporation of metal silicates alone to alloys of polycarbonate resins and either styrene resins or polyester resins and alloys of polyphenylene ether resins and aromatic vinyl resins is not effective in imparting flame retardancy thereto. Furthermore, there is no description of a synergistic effect of silicone compounds and metal silicates on flame retardancy. Moreover, an alloy composition of an aromatic vinyl resin and a polyphenylene ether resin containing an inorganic filler having a silicon element and containing a silicone compound having an RSiO_{3/2} unit as a main unit is disclosed (Patent Document 15). However, the alloy composition has insufficient flame retardancy. Thus, it is desirable to further improve flame retardancy.
Patent Document 1: Japanese Unexamined Patent Application Publication No. 10-139964
Patent Document 2: Japanese Unexamined Patent Application Publication No. 11-140294
Patent Document 3: Japanese Unexamined Patent Application Publication No. 11-222559
Patent Document 4: US. Pat. No. 3,737,479
Patent Document 5: Japanese Examined Patent Application Publication No. 6-62843
Patent Document 6: Japanese Unexamined Patent Application Publication No. 2001-294743
Patent Document 7: Japanese Unexamined Patent Application Publication No. 2000-178436
Patent Document 8: Japanese Unexamined Patent Application Publication No. 2000-297209
Patent Document 9: Japanese Unexamined Patent Application Publication No. 2001-139790
Patent Document 10: Japanese Unexamined Patent Application Publication No. 2001-311081
Patent Document 11: Japanese Unexamined Patent Application Publication No. 2001-316671
Patent Document 12: Japanese Unexamined Patent Application Publication No. 2001-323269
Patent Document 13: Japanese Unexamined Patent Application Publication No. 11-256022
Patent Document 14: Japanese Unexamined Patent Application Publication No. 2003-82218
Patent Document 15: Japanese Unexamined Patent Application Publication No. 2002-97374

### Disclosure of Invention

### Problems to be Solved by the Invention

In consideration of the above-described situation, it is an object of the present invention to provide a flame-retardant polycarbonate and/or polyphenylene ether resin composition that is free from a halogen atom and a phosphorus atom and that has high thermal resistance, impact resistance, and satisfactory flame retardancy.

### Means for Solving the Problems

The Inventors have focused attention on the effect of a silicone compound having the effect of imparting some flame retardancy to even an alloy of a polycarbonate resin and either a styrene resin or a polyester resin or an alloy of a polyphenylene ether resin and an aromatic vinyl resin, have conducted intensive studies on the improvement of flame retardancy, and found that a resin composition combined with a specific inorganic compound has excellent flame retardancy by addition of only a small amount of a silicone compound. This finding resulted in the completion of the present invention.

The present invention relates to a flame-retardant resin composition including 0.1 to 20 parts by weight of a silicone compound (C) represented by average chemical formula (1):

R¹ₘR²ₙSiO_{(4-m-n)/2} (1)

(wherein R¹ represents a monovalent aliphatic hydrocarbon group having 1 to 4 carbon atoms; R² represents a monovalent aromatic hydrocarbon group having 6 to 24 carbon atoms; there may be two or more R¹s and two or more R²s; and m and n each represent a value satisfying expressions: 1.1 ≤ m + n ≤ 1.7, and 0.4 ≤ n/m ≤ 2.5); 0.1 to 20 parts by weight of a metal silicate (D) having a pH of 8.0 or more, containing 30 percent by weight or more of a SiO₂ unit, and having an average particle size in the range of 1 nm to 100 µm, relative to 100 parts by weight of a thermoplastic resin mixture containing 30 to 100 parts by weight of an aromatic polycarbonate or a polyphenylene ether resin (A) and 0 to 70 parts by weight of an aromatic vinyl resin or a thermoplastic polyester resin (B).

### Effects of the Invention

A flame-retardant resin composition of the present invention has significantly satisfactory flame retardancy without common flame retardant containing chlorine, bromine, phosphorus, nitrogen, or the like; hence, inherent features of the resin are not much degraded. Furthermore, the flame-retardant resin composition of the present invention can be relatively easily prepared from inexpensive starting materials. The flame-retardant resin composition is significantly useful in industry.

### Best Mode for Carrying Out the Invention

The present invention will be described in detail below.

A polycarbonate resin (A-1) used in the present invention is prepared by reaction of a di- or higher-hydric phenol compound and either phosgene or a carbonic acid diester such as diphenyl carbonate.

Examples of the di- or higher-hydric phenol compound include dihydric phenols, such as dihydroxydiarylalkanes, e.g., 2,2-bis(4-hydroxyphenyl)propane [commonly called bisphenol A], bis(4-hydroxyphenyl)methane, bis(4-hydroxyphenyl)phenylmethane, bis(4-hydroxyphenyl)naphthylmethane, bis(4-hydroxyphenyl)-(4-isopropylphenyl)methane, bis(3,5-dimethyl-4-hydroxyphenyl)methane, 1,1-bis(4-hydroxyphenyl)ethane, 1-naphthyl-1,1-bis(4-hydroxyphenyl)ethane, 1-phenyl-1,1-bis(4-hydroxyphenyl) ethane, 1,2-bis(4-hydroxyphenyl)ethane, 2-methyl-1,1-bis(4-hydroxyphenyl)propane, 2,2-bis(3,5-dimethyl-4-hydroxyphenyl)propane, 1-ethyl-1,1-bis(4-hydroxyphenyl)propane, 2,2-bis(3-methyl-4-hydroxyphenyl)propane, 2,2-bis(3-fluoro-4-hydroxyphenyl)propane, 1,1-bis(4-hydroxyphenyl)butane, 2,2-bis(4-hydroxyphenyl)butane, 1,4-bis(4-hydroxyphenyl)butane, 2,2-bis(4-hydroxyphenyl)pentane, 4-methyl-2,2-bis(4-hydroxyphenyl)pentane, 2,2-bis(4-hydroxyphenyl)hexane, 4,4-bis(4-hydroxyphenyl)heptane, 2,2-bis(4-hydroxyphenyl)nonane, 1,10-bis(4-hydroxyphenyl)decane, 1,1-bis(4-hydroxyphenyl)-3,3,5-trimethylcyclohexane, and 2,2-bis(4-hydroxyphenyl)-1,1,1,3,3,3-hexafluoropropane; dihydroxydiarylcycloalkanes, e.g., 1,1-bis(4-hydroxyphenyl)cyclohexane and 1,1-bis(4-hydroxyphenyl)cyclodecane; dihydroxydiaryl sulfones, e.g., bis(4-hydroxyphenyl) sulfone and bis(3,5-dimethyl-4-hydroxyphenyl) sulfone; dihydroxydiaryl ethers, e.g., bis(4-hydroxyphenyl) ether and bis(3,5-dimethyl-4-hydroxyphenyl) ether; dihydroxydiaryl ketones, e.g., 4,4'-dihydroxybenzophenone and 3,3',5,5'-tetramethyl-4,4'-dihydroxybenzophenone; dihydroxydiaryl sulfides, e.g., bis(4-hydroxyphenyl) sulfide, bis(3-methyl-4-hydroxyphenyl) sulfide, and bis(3,5-dimethyl-4-hydroxyphenyl) sulfide; dihydroxydiaryl sulfoxides, e.g., bis(4-hydroxyphenyl) sulfoxide; dihydroxydiphenyls, e.g., 4,4'-dihydroxydiphenyl; and dihydroxyarylfluorenes, e.g., 9,9-bis(4-hydroxyphenyl)fluorene. Examples the di- or higher-hydric phenol compound other than the dihydric phenols include dihydroxybenzenes, such as hydroquinone, resorcinol, and methylhydroquinone; and dihydroxynaphthalenes such as 1,5-dihydroxynaphthalene and 2,6-dihydroxynaphthalene. Among these, 2,2-bis(4-hydroxydiphenyl)propane, bis(4-hydroxyphenyl) methane, bis(4-hydroxyphenyl)phenylmethane, bis(3,5-dimethyl-4-hydroxyphenyl)methane, 1-phenyl-1,1-bis(4-hydroxyphenyl)ethane, 2,2-bis(3,5-dimethyl-4-hydroxyphenyl) propane, 1,1-bis(4-hydroxyphenyl)-3,3,5-trimethylcyclohexane, bis(4-hydroxyphenyl) sulfone, and 4,4'-dihydroxybenzophenone are preferred in view of moldability and flame retardancy of the flame-retardant thermoplastic resin composition and mechanical strength and flame retardancy of a molded article to be produced. These dihydric phenols and the like may be used alone or in combination of two or more.

Examples of the carbonic acid diester compound include diaryl carbonates such as diphenyl carbonate; and dialkyl carbonates, such as dimethyl carbonate and diethyl carbonate.

The polycarbonate resin (A-1) may contain a branching agent in order to impart a branching ability according to need. Examples of the branching agent include phloroglucine, mellitic acid, trimellitic acid, trimellitic acid chloride, trimellitic anhydride, gallic acid, n-propyl gallate, protocatechuic acid, pyromellitic acid, pyromellitic dianhydride, α-resorcylic acid, β-resorcylic acid, resorcinol aldehyde, trimethyl chloride, isatin bis(o-cresol), trimethyl trichloride, 4-chloroformylphthalic anhydride, benzophenone tetracarboxylic acid, 2,4,4'-trihydroxybenzophenone, 2,2',4,4'-tetrahydroxybenzophenone, 2,4,4'-trihydroxyphenyl ether, 2,2',4,4'-tetrahydroxyphenyl ether, 2,4,4'-trihydroxydiphenyl-2-propane, 2,2'-bis(2,4-dihydroxy)propane, 2,2',4,4'-tetrahydroxydiphenylmethane, 2,4,4'-trihydroxydiphenylmethane, 1-[α-methyl-α-(4'-dihydroxyphenyl)ethyl]-3-[α',α'-bis(4''-hydroxyphenyl)ethyl]benzene, 1-[α-methyl-α-(4'-dihydroxyphenyl)ethyl]-4-[α',α'-bis(4''-hydroxyphenyl)ethyl]benzene, α,α',α''-tris(4-hydroxyphenyl)-1,3,5-triisopropylbenzene, 2,6-bis(2-hydroxy-5'-methylbenzyl)-4-methylphenol, 4,6-dimethyl-2,4,6-tris(4'-hydroxyphenyl)-2-heptene, 4,6-dimethyl-2,4,6-tris(4'-hydroxyphenyl)-2-heptane, 1,3,5-tris(4'-hydroxyphenyl)benzene, 1,1,1-tris(4-hydroxyphenyl)ethane, 2,2-bis[4,4-bis(4'-hydroxyphenyl)cyclohexyl]propane, 2,6-bis(2'-hydroxy-5'-isopropylbenzyl)-4-isopropylphenol, bis[2-hydroxy-3-(2'-hydroxy-5'-methylbenzyl)-5-methylphenyl]methane, bis[2-hydroxy-3-(2'-hydroxy-5'-isopropylbenzyl)-5-methylphenyl]methane, tetrakis(4-hydroxyphenyl)methane, tris(4-hydroxyphenyl)phenylmethane, 2',4',7-trihydroxyflavan, 2,4,4-trimethyl-2',4',7-trihydroxyflavan, 1,3-bis(2',4'-dihydroxyphenylisopropyl)benzene, and tris(4'-hydroxyphenyl)-amyl-s-triazine.

According to circumstances, the polycarbonate resin (A-1) may be a polycarbonate-polyorganosiloxane copolymer containing a polycarbonate segment and a polyorganosiloxane segment. In this case, the degree of polymerization of the polyorganosiloxane is preferably 5 or more.

Any known terminator may be used in synthesizing the polycarbonate resin (A-1). Examples thereof include monohydric phenols, such as phenol, p-cresol, p-tertbutylphenol, p-tert-octylphenol, p-cumylphenol, bromophenol, tribromophenol, and nonylphenol.

To further enhance flame retardancy, a copolymer of a polycarbonate resin and a phosphorus-containing compound may be used. Alternatively, a polycarbonate resin terminated with a phosphorus-containing compound may be used. Furthermore, to enhance weatherability, a copolymer of a polycarbonate resin and a benzotriazole group-containing dihydric phenol may be used. Alternatively, a polycarbonate resin terminated with a benzotriazole group-containing monohydric phenol may be used.

A polycarbonateresin or a polycarbonate-polyorganosiloxane copolymer prepared by allowing at least one phenol compound preferably selected from 2,2-bis(4-hydroxydiphenyl)propane, bis(4-hydroxyphenyl)methane, bis(4-hydroxyphenyl)phenylmethane, bis(3,5-dimethyl-4-hydroxyphenyl)methane, 1-phenyl-1,1-bis(4-hydroxyphenyl)ethane, 2,2-bis(3,5-dimethyl-4-hydroxyphenyl)propane, 1,1-bis(4-hydroxyphenyl)-3,3,5-trimethylcyclohexane, bis(4-hydroxyphenyl) sulfone, and 4,4'-dihydroxybenzophenone and more preferably selected from 2,2-bis(4-hydroxydiphenyl)propane, 1,1-bis(4-hydroxyphenyl)-3,3,5-trimethylcyclohexane to react with phosgene or carbonic acid diester is preferably used as the polycarbonate resin (A-1) in view of moldability of the flame-retardant thermoplastic resin composition of the present invention and mechanical strength of a molded article to be formed.

The polycarbonate resin (A-1) preferably has a viscosity-average molecular weight of 10,000 to 60,000, more preferably 15,000 to 45,000, and most preferably 18,000 to 35,000. A viscosity-average molecular weight less than 10,000 results in a resin composition having insufficient flame retardancy, strength, and the like. A viscosity-average molecular weight exceeding 60,000 results in a tendency to poor flowability in molding.

The polycarbonate resin (A) may be used alone. Alternatively, two or more polycarbonate resins (A) may be used in combination. When two or more polycarbonate resins are used in combination, the combination is not limited. For example, polycarbonate resins having different monomer units, different molar ratios of copolymerization, different molecular weights, and the like may be desirably combined.

A polyphenylene ether resin (A-2) used in the present invention is a homopolymer or a copolymer composed of repeating units represented by general formulae [a] and [b]:

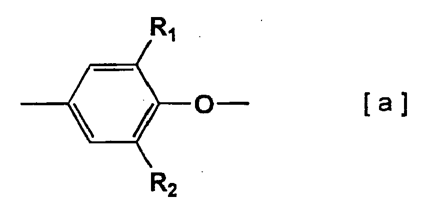

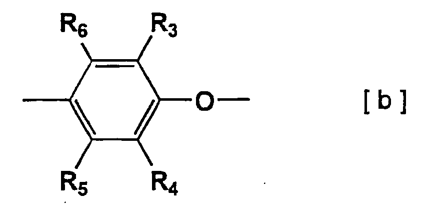

(wherein R₁, R₂, R₃, R₄, R₅, and R₆ each represent a monovalent moiety, such as an alkyl group having 1 to 4 carbon atoms, an aryl group, a halogen, or hydrogen, and R₅ and R₆ are not hydrogen at the same time). Representative examples of the homopolymer as the polyphenylene ether resin (A) include homopolymers, such as poly(2,6-dimethyl-1,4-phenylene ether, poly(2-methyl-6-ethyl1,4-phenylene) ether, poly(2,6-diethyl-1,4-phenylene) ether, poly(2-ethyl-6-n-propyl-1,4-phenylene) ether, poly(2,6-di-n-propyl-1,4-phenylene) ether, poly(2-methyl-6-n-butyl-1,4-phenylene) ether, poly(2-ethyl-6-isopropyl-1,4-phenylene) ether, poly(2-methyl-6-chloroethyl-1,4-phenylene) ether, poly(2-methyl-6-hydroxyethyl-1,4-phenylene) ether, and poly(2-methyl-6-chloroethyl-1,4-phenylene) ether.

The polyphenylene ether copolymer includes a polyphenylene ether copolymer mainly composed of a polyphenylene ether structure, for example, a copolymer of 2,6-dimethylphenol and 2,3,6-trimethylphenol, a copolymer of 2,6-dimethylphenol and o-cresol, or a copolymer of 2,6-dimethylphenol, 2,3,6-trimethylphenol, and o-cresol.

Furthermore, the polyphenylene ether resin (A-2) of the present invention may contain various other phenylene ether units, which may be present in known polyphenylene ether resins, as partial structures within the gist of the present invention. Examples of the phenylene ether units that may be contained in a small content include a 2-(dialkylaminomethyl)-6-methylphenylene ether unit and a 2-(N-alkyl-N-phenylaminomethyl)-6-methylphenylene ether unit described in Japanese Patent Application No. 63-12698 and Japanese Unexamined Patent Application Publication No. 63-301222.

Furthermore, a polyphenylene ether resin having a main chain to which a small amount of diphenoquinone or the like is bonded is also included. The polyphenylene ether resin (A-2) used in the present invention preferably has a number-average molecular weight of 1,000 to 100,000 and more preferably 6,000 to 60,000. The phrase "number-average molecular weight" in the present invention means a number-average molecular weight in terms of polystyrene calculated using a polystyrene standard calibration curve determined by gel-permeation chromatography.

An aromatic vinyl resin (B-1) of the present invention is a homopolymer or a copolymer of at least one aromatic vinyl compound. Alternatively, the aromatic vinyl resin (B-1) is a copolymer, a block copolymer, or a graft copolymer of at least one aromatic vinyl compound and at least one olefin compound.

The aromatic vinyl compound is at least one compound selected from styrene, methylstyrene, ethylstyrene, dimethylstyrene, chlorostyrene, α-methylstyrene, and vinyltoluene. The olefin compound is at least one compound selected from monoolefins, such as acrylonitrile, methyl methacrylate, ethylene, propylene, 1-butene, and isobutylene; conjugated dienes, such as butadiene, isoprene, and 1,3-pentadiene; and nonconjugated diolefins, such as 1,4-hexadiene, norbornene, and norbornene derivatives.

A polystyrene, a high-impact polystyrene, an AS resin, a MAS resin, an ABS resin, an AAS resin, an AES resin, an MBS resin, or the like is suitably selected as a material for forming an alloy with the aromatic polycarbonate resin (A-1). A molded article composed of the alloy has high thermal resistance and impact resistance. The ratio of the aromatic polycarbonate and the aromatic vinyl resin may be selected within the range in which thermal resistance, impact resistance, and melt-flowability are not degraded. For example, (A-1)/(B-1) is in the range of about 40 to 95 (parts by weight), preferably about 50 to 95/50 to 5 (parts by weight), and more preferably about 55 to 85/45 to 15 (parts by weight). A polycarbonate content less than 40 parts by weight results in high melt-flowability but results in an easy reduction in the thermal resistance and impact resistance of a molded article. A polycarbonate content exceeding 95 parts by weight results in an easy reduction in melt-flowability during molding.

A homopolymer of an aromatic vinyl compound or a block copolymer of an aromatic vinyl compound polymer block and a polymer block mainly composed of a conjugated diene compound is preferably used as the aromatic vinyl resin (B-1) for forming an alloy with the polyphenylene ether resin (A-2). The aromatic vinyl compound is one or two or more compounds selected from styrene, α-methylstyrene, vinyltoluene, and the like. Among these, styrene is particularly preferred.

The conjugated diene compound is one or two or more compounds selected from butadiene, isoprene, 1,3-pentadiene, and the like. Among them, butadiene and/or isoprene is particularly preferred. The weight ratio of the content of the aromatic vinyl compound to the content of conjugated diene compound is preferably in the range of 50/50 to 90/10 and more preferably 55/45 to 85/15. A content of the vinyl aromatic compound less than 50 percent by weight causes delamination due to poor compatibility in molding a resin composition and adversely affects flowability.

The above-described block copolymer preferably has a number-average molecular weight of 2,000 to 500,000 and more preferably 20,000 to 300,000. The molecular weight distribution (the ratio of the weight-average molecular weight to the number-average molecular weight) is preferably in the range of 1.05 to 10. Examples of the molecular structure of the block copolymer include linear, branched, radial, and combinations thereof. Among them, a linear block copolymer is more preferred.

Examples of a method for producing the block copolymer include methods described in Japanese Examined Patent Application Publication No. 36-19286, Japanese Examined Patent Application Publication No. 43-14979, Japanese Examined Patent Application Publication No. 49-36957, Japanese Examined Patent Application Publication No. 48-2423, and Japanese Examined Patent Application Publication No. 48-4106. Any one of these methods is a method of performing block copolymerization of a vinyl aromatic compound and a conjugated diene compound in a hydrocarbon solvent using an organic lithium compound as an anionic polymerization initiator and optionally using a vinylating agent, a coupling agent, and the like.

With respect to the ratio of the polyphenylene ether resin (A-2) to the aromatic vinyl resin (B-1), it is necessary that the content of the polyphenylene ether resin (A-2) is in the range of 30 to 100 parts by weight and the content of the aromatic vinyl resin (B-1) is in the range of 0 to 70 parts by weight, the total content being 100 parts by weight. A content of the polyphenylene ether resin (A-2) less than 30 parts by weight degrades mechanical properties and thus is not preferred.

A thermoplastic polyester resin (B-2) used in the present invention is a thermoplastic polyester prepared by known polycondensation of a di- or higher-valent carboxylic acid component, a di- or higher-hydric alcohol, and/or a phenol component. Specific examples of the thermoplastic polyester resin include polyethylene terephthalates, polypropylene terephthalates, polybutylene terephthalate, polyhexamethylene terephthalate, polycyclohexane dimethylene terephthalate, polyethylene naphthalate, and polybutylene naphthalate.

A di- or higher-valent aromatic carboxylic acid having 8 to 22 carbon atoms or an ester-formable derivative thereof is used as the di- or higher-valent aromatic carboxylic component. Specific examples of the di- or higher-valent aromatic carboxylic acid include phthalic acids, such as terephthalic acid and isophthalic acid; carboxylic acids, such as naphthalenedicarboxylic acid, bis(p-carboxyphenyl)methaneanthracenedicarboxylic acid, 4-4'-diphenyldicarboxylic acid, 1,2-bis(phenoxy)ethane-4,4'-dicarboxylic acid, diphenyl sulfone dicarboxylic acid, trimesic acid, trimellitic acid, and pyromellitic acid; and ester-formable derivatives thereof. These compounds may be used alone or in combination of two or more. Preferably used are terephthalic acid, isophthalic acid, and naphthalenedicarboxylic acid in view of ease of handling and reaction and excellent physical properties of a resin to be formed.

Examples of the di- or higher-hydric alcohol and/or phenol component include aliphatic compounds each having 2 to 15 carbon atoms, alicyclic compounds each having 6 to 20 carbon atoms, and aromatic compounds each having 6 to 40 carbon atoms in its molecule, these compounds each having two or more hydroxy groups; and ester-formable derivatives thereof. Specific examples of the alcohol and/or phenol component include ethylene glycol, propylene glycol, butanediol, hexanediol, decanediol, neopentyl glycol, cyclohexanedimethanol, cyclohexanediol, 2,2'-bis(4-hydroxyphenyl)propane, 2,2'-bis(4-hydroxycyclohexyl)propane, hydroquinone, glycerol, and pentaerythritol; and ester-formable derivatives thereof. The alcohol and/or phenol component is preferably ethylene glycol, butanediol, or cyclohexanedimethanol in view of ease of handling and reaction and excellent physical properties of a resin to be formed.

A known copolymerizable component other than the above-described acid component and alcohol and/or phenol component may be used in the synthesis of the thermoplastic polyester resin (B-2) within the range in which target properties are not degraded. Examples of the copolymerizable component include carboxylic acids, such as di- or higher-valent aliphatic carboxylic acids each having 4 to 12 carbon atoms and di- or higher-valent alicyclic carboxylic acids each having 8 to 15 carbon atoms; and ester-formable derivatives thereof. Specific examples of these include dicarboxylic acids, such as adipic acid, sebacic acid, azelaic acid, dodecanedicarboxylic acid, maleic acid, 1,3-cyclohexanedicarboxylic acid, and 1,4-cyclohexanedicarboxylic acid; and ester-formable derivatives thereof.

Furthermore, oxyacids, such as p-oxybenzoic acid and p-hydroxybenzoic acid, ester-formable derivatives thereof, cyclic esters such as s-caprolactone, and the like may be used as copolymerizable components. Furthermore, a copolymerizable component partially having a polyalkylene glycol unit in a polymeric chain may be used, examples of the copolymerizable component including polyethylene glycol, polypropylene glycol, a poly(ethylene oxide-propylene oxide) block and/or random copolymer, a polyethylene oxide addition polymer copolymerized with bisphenol A, a propylene oxide addition polymer copolymerized with bisphenol A, a tetrahydrofuran addition polymer copolymerized with bisphenol A, and polytetramethylene glycol. The content of the copolymerizable component is about 20 percent by weight or less, preferably 15 percent by weight or less, and more preferably 10 percent by weight or less.

The thermoplastic polyester resin (B-2) is a polyalkylene terephthalate preferably containing 80 percent by weight or more, more preferably 85 percent by weight or more, and most preferably 90 percent by weight or more of an alkylene terephthalate unit, because a composition to be formed has a good balance of physical properties (for example, moldability and mechanical properties).

The thermoplastic polyester resin (B-2) preferably has an inherent viscosity (IV) of 0.30 to 2.00 dl/g or more, more preferably 0.40 to 1.80 dl/g, and still more preferably 0.50 to 1.60 dl/g when measured in a 1/1 (weight ratio) phenol/tetrachloroethane mixed solvent at 25°C. An inherent viscosity less than 0.30 often results in insufficient flame retardancy and mechanical strength of a molded article. An inherent viscosity exceeding 2.00 dl/g results in a tendency to reduce moldability.

The thermoplastic polyester resin (B-2) may be used alone. Alternatively, two or more thermoplastic polyester resins (B-2) may be used in combination. When two or more thermoplastic polyester resins (B-2) are used in combination, the combination is not limited. For example, thermoplastic polyester resins having different copolymerizable components, different molar ratios, and/or different molecular weights may be desirably combined.

In the present invention, the mixing ratio by weight of the aromatic polycarbonate resin (A-1) to the thermoplastic polyester resin (B-2) is in the range of 30/70 to 100/0, preferably 60/40 to 95/5, more preferably 63/37 to 90/10, and particularly preferably 65/35 to 85/15. In the mixing ratio of the aromatic polycarbonate resin (A-1) to the thermoplastic polyester resin (B-2), a content of the thermoplastic polyester resin (B-2) less than 95/5 tends to be not preferred in view of chemical resistance of a molded article to be formed. A content of the thermoplastic polyester resin (B-2) exceeding 60/40 tends to be not preferred in view of thermal resistance and a balance between flame retardancy and chemical resistance.

A silicone compound as component (C) of the present invention is an aromatic group-containing organosiloxane compound, is composed of any combination of four constitutional units: a Q unit (SiO₂), a T unit (RSiO_{1.5}), a D unit (R₂SiO), and an M unit (R₃SiO_{0.5}), and is represented by the following average chemical formula:

R¹ₘR²ₙSiO_{(4-m-n)/2} (1)

(wherein R¹ represents a monovalent aliphatic hydrocarbon group having 1 to 4 carbon atoms; R² represents a monovalent aromatic hydrocarbon group having 6 to 24 carbon atoms; there may be two or more R¹s and two or more R²s; and m and n each represent a value satisfying expressions: 1.1 ≤ m + n ≤ 1.7, and 0.4 ≤ n/m ≤ 2.5).

The aromatic group-containing organosiloxane compound represented by average chemical formula (1) satisfies the following requirements: the compound has both monovalent aliphatic hydrocarbon group R¹ having 1 to 4 carbon atoms and monovalent aromatic hydrocarbon group R² having 6 to 24 carbon atoms in its molecule; the molar ratio of the total hydrocarbon group to the number of Si atoms, i.e., m + n, is in the range of 1.1 ≤ m + n ≤ 1.7; and the molar ratio of monovalent aliphatic hydrocarbon group R¹ having 1 to 4 carbon atoms to monovalent aromatic hydrocarbon group R² having 6 to 24 carbon atoms, i.e., n/m, is in the range of 0.4 ≤ n/m ≤ 2.5. Ratios of elements and hydrocarbon groups are calculated by means of 1H-NMR, 13C-NMR, and 29Si-NMR.

Aliphatic hydrocarbon group R¹ having 1 to 4 carbon atoms is not particularly limited. Examples thereof include a methyl group, an ethyl group, an n-propyl group, an i-propyl group, an n-butyl group, a sec-butyl group, and a tert-butyl group. Among them, a methyl group and an ethyl group are preferred, and a methyl group is more preferred because of excellent flame retardancy. The silicone compound (C) contains a plurality of moieties corresponding to R¹s that may be the same or different. When the aliphatic hydrocarbon group has a carbon atom number of 5 or more, the aromatic group-containing organosiloxane compound has low flame retardancy; hence, the effect of imparting flame retardancy is low.

A monovalent aromatic hydrocarbon group R² having 6 to 24 carbon atoms is not particularly limited. Examples thereof include a phenyl group, a methylphenyl group, a dimethylphenyl group, an ethylphenyl group, a naphthyl group, and an anthracenyl group. Among these, an aromatic group not having a substituent on the aromatic ring is preferred, and a phenyl group is more preferred because of excellent flame retardancy. The silicone compound (C) of the present invention has a plurality of moieties corresponding to R²s that may be the same or different.

The molar ratio of the total hydrocarbon group to the number of Si atoms, i.e., m + n, is in the range of 1.1 ≤ m + n ≤ 1.7, preferably 1.15 ≤ m + n ≤ 1.65, more preferably 1.18 ≤ m + n ≤ 1.6, and still more preferably 1.20 ≤ m + n ≤ 1.55. When m + n is less than 1.1 or exceeds 1.7, the aromatic group-containing organosiloxane compound has low flame retardancy, which is not preferred. Introduction of the T unit and/or the Q unit into the skeleton of the organosiloxane compound can form a structure having the above-described range. In general, a larger amount of these units introduced can more easily achieve the above-described range. The amount of the T unit and/or the Q unit introduced is preferably 20% or more, more preferably 25% or more, and most preferably 30% or more relative to the total Si atoms.

For an alloy of the polyphenylene ether resin (A-1) and the aromatic vinyl resin (B-1), a predetermined amount or more of the Q unit is preferably introduced into the skeleton of the organosiloxane compound in view of flame retardancy. The amount of the Q unit introduced is preferably 10% or more, more preferably 15% or more, and most preferably 20% or more relative to the total Si atoms. Compatibility between the alloy and an inorganic silicate compound as component (D) of the present invention improves with increasing amount of the T unit and/or the Q unit introduced, thereby further improving flame retardancy because of synergism.

The molar ratio of monovalent aliphatic hydrocarbon group R¹ having 1 to 4 carbon atoms to monovalent aromatic hydrocarbon group R² having 6 to 24 carbon atoms, i.e., n/m, is in the range of 0.4 ≤ n/m ≤ 2.5. When n/m is less than 0.4, the number of monovalent aliphatic hydrocarbon groups R¹ is increased in its molecule. In this case, the thermal resistance of the aromatic group-containing organosiloxane compound is reduced, thus causing a reduction in the effect of imparting flame retardancy of the aromatic group-containing organosiloxane compound. In contrast, when n/m is 2.5 or more, it also causes a reduction in the effect of imparting flame retardancy of the aromatic group-containing organosiloxane compound. The value of n/m is preferably 0.43 ≤ n/m ≤ 2.3, more preferably 0.45 ≤ n/m ≤ 2.1, and still more preferably 0.47 ≤ n/m ≤ 2.0.

A preferred example of the structure of the aromatic group-containing organosiloxane compound is a structure in which the main chain skeleton contains 10 mol% or more of the Q unit, and the remainder is formed of the T unit and the D unit. Another preferred example is a structure in which the main chain skeleton consists of the Q unit and the T unit or consists of the Q unit and the D unit. Therminals of the main chain skeleton are capped with the M units.

Such aromatic group-containing organosiloxane compound can be easily synthesized by a known method for synthesizing a silicone. That is, the compound can be synthesized by condensation reaction of at least one silicon compound and preferably at least two silicon compounds selected from monofunctional silicon compounds expressed as R₃SiX, bifunctional silicon compounds expressed as R₂SiX₂, trifunctional silicon compounds expressed as RSiX₃, tetrahalogenated silicons, tetraalkoxysilanes, organic silicon compounds, which are condensates thereof, and inorganic silicon compounds, such as water glass and metal silicates, according to need, wherein R represents an aromatic hydrocarbon group or an aliphatic hydrocarbon group; and X represents a siloxane bond-formable group, such as a halogen, a hydroxy group, or an alkoxy group, after condensation.

Reaction conditions vary in accordance with a substrate used and the composition and the molecular weight of a target compound. In general, the reaction can be performed by mixing a silicon compound optionally in the presence of water, an acid, and/or anorganic solvent while heating, if necessary. The ratio of the silicon compounds used may be appropriately determined by adjusting the content of each unit and the ratio of the aromatic hydrocarbon group to the aliphatic hydrocarbon group in such a manner that an aromatic group-containing organosiloxane compound to be prepared satisfies the above-described requirements.

The organosiloxane compound has a number-average molecular weight in the range of 1,000 to 200,000, preferably 1,500 to 1,500,000, and more preferably 2,000 to 100,000. In general, in silicone compounds described in item "Background Art", the molecular weight and flame retardancy are discussed. In the present invention, the thermal resistance of the silicone can be controlled by a predetermined content of the siloxane bond in its molecule regardless of molecular weight; hence, the molecular weight does not significantly affect flame retardancy within the above-described range. A number-average molecular weight less than 1,000 results in low thermal resistance of the organopolysiloxane, thus leading to insufficient flame retardancy. A number-average molecular weight exceeding 200,000 disadvantageously results in poor dispersibility in a resin and poor moldability.

The amount of the silicone compound (C) added of the present invention is 0.1 to 20 parts by weight, preferably 0.3 to 15 parts by weight, and most preferably 0.5 to 10 parts by weight in view of expression of physical properties and economic efficiency relative to 100 parts by weight of a thermoplastic resin mixture containing 30 to 100 parts by weight of an aromatic polycarbonate or a polyphenylene ether resin (A) and 0 to 70 parts by weight of an aromatic vinyl resin or a thermoplastic polyester resin (B).

In a thermoplastic resin mixture of the polycarbonate resin (A-1) and the thermoplastic polyester resin (B-2), only an amount of the inventive silicone compound (C) added of 0.1 to 6 parts by weight and preferably 0.2 to 4.5 parts by weight relative to 100 parts by weight of the thermoplastic resin mixture can achieve target flame retardancy and is thus preferred.

When the amount added is less than 0.1 parts by weight, flame retardancy is not sufficient, in some cases. When the amount added is 20 parts by weight or more, there is no particular problem with physical properties. However, it is necessary to achieve higher economic efficiency.

A metal silicate compound (D) of the present invention has a pH of 8.0 or more, contains 30 percent by weight or more of a SiO₂ unit, and has an average particle size of 1 nm to 100 µm. This component is added in combination with a specific silicone compound in order to enhance the effect of imparting flame retardancy. The content of the SiO₂ unit is 30 percent by weight or more, preferably 35% or more, and more preferably 40 percent by weight or more in view of flame retardancy.

The metal silicate compound, which is used as component (D), containing 30 percent by weight or more of the SiO₂ unit is not particularly limited but contains at least one metal element selected from K, Na, Li, Ca, Mn, Fe, Ni, Mg, Fe, Al, Ti, Zn, and Zr. Examples of the metal silicate compound include magnesium silicate, aluminum silicate, calcium silicate, talc, mica, wollastonite, kaolin, diatomaceous earth, and smectite. Among these, mica, talc, kaolin, or smectite is preferred because of excellent flame retardancy and mechanical strength of a resin composition to be prepared.

The metal silicate compound (D) is in the form of fine particles having an average particle size of 1 nm to 100 µm. An average-particle size exceeding 100 µm results in a tendency to degrade the appearance of a molded article to be formed and to reduce the impact resistance of a resin composition. The average particle size is preferably 1 nm to 70 µm, more preferably 10 nm to 50 µm, and more preferably 0.5 to 30 µm. The average particle size in the present invention can be measured by laser diffraction analysis with a Microtrac.

The shape of the metal silicate compound (D) is not particularly limited but is typically powdery, granular, acicular, flat, or the like. This inorganic compound may be naturally existing material or synthesized material. In the case of the naturally existing material, fields and the like are not particularly limited, and the material may be appropriately selected.

The metal silicate compound (D) of the present invention has a pH of 8.0 or more. A pH of the metal silicate compound of 8.0 or more means that the compound has an ionic bonding nature between silicate anions and metal cations. Although the metal silicate is thermally stable, when a silicone compound coexists, the metal silicate can chemically interact with the silicone compound at high-temperatures because of the ionic bonding nature, thereby synergistically affecting flame retardancy. The pH in the present invention can be measured with a digital pH meter in accordance with JIS-K-5101 Method B.

The metal silicate compound (D) may be subjected to surface treatment with any one of surface-treatment agents such as a silane finish in order to enhance adhesiveness to a resin. The surface-treatment agent is not particularly limited. Any known surface-treatment agent may be used. An epoxy group-containing silane coupling agent such as epoxysilane and an amino group-containing silane coupling agent such as aminosilane are preferred because physical properties of the resin are not significantly degraded. In addition, polyoxyethylenesilane or the like may be used. A surface-treating method is not particularly limited. A common surface-treating method may be used.

The metal silicate compound (D) may be used alone. Alternatively, two or more metal silicate compounds (D) that are different in average particle size, type, surface-treatment agent, and the like may be used in combination.

The content of the metal silicate compound (D) used in the thermoplastic resin composition of the present invention is 0.1 to 20 parts by weight relative to 100 parts by weight of a thermoplastic resin mixture containing 30 to 100 parts by weight of an aromatic polycarbonate or a polyphenylene ether resin (A) and 0 to 70 parts by weight of an aromatic vinyl resin or a thermoplastic polyester resin (B). A content of the metal silicate compound (D) less than 0.1 parts by weight leads to insufficient flame retardancy of a resin composition to be prepared. A content of the metal silicate compound (D) exceeding 20 parts by weight results in degradation in the impact resistance and surface properties of a molded article to be formed and results in a tendency to be difficult to knead the metal silicate compound (D) and the resin during melt-kneading. The content of the metal silicate compound (D) is preferably 0.3 to 15 parts by weight and more preferably 0.5 to 10 parts by weight.

A fluorocarbon resin (E) used in the present invention is a resin containing a fluorine atom. Specific examples thereof include fluorinated polyolefin resins, such as polymonofluoroethylene, polydifluoroethylene, polytrifluoroethylene, polytetrafluoroethylene, and tetrafluoroethylene/hexafluoropropylene copolymers; and polyvinylidene fluorides. Furthermore, a copolymer prepared by polymerization of a monomer used for the production of the fluorocarbon resin (E) and a monomer copolymerizable therewith may be used.

The fluorocarbon resin (E) is preferably a fluorinated polyolefin resin and more preferably a fluorinated polyolefin resin having an average particle size of 700 µm or less. The phrase "average particle size" defined here means the average particle size of secondary particles formed by aggregation of primary particles of the fluorinated polyolefin resin.

Furthermore, the fluorinated polyolefin resin is preferably a fluorinated polyolefin resin having a ratio of density to bulk density (density/bulk density) of 6.0 or less. The terms "density" and "bulk density" defined here refer to those measured in accordance with a method described in JIS-K6891.

The fluorocarbon resin (E) may be used alone. Alternatively, two or more fluorocarbon resins (E) may be used in combination. When two or more fluorocarbon resins (E) is used in combination, the combination is not limited. For example, different types of fluorocarbon resin (E) may be desirably used.

The amount of the fluorocarbon resin (E) used is 0.005 to 1 part by weight, preferably 0.01 to 0.75 parts by weight, and more preferably 0.02 to 0.6 parts by weight relative to 100 parts by weight of the total of two components: an aromatic polycarbonate resin or a polyphenylene ether resin (A) and an aromatic vinyl resin or a thermoplastic polyester resin (B). An amount used less than 0.005 results in a small effect of improving flame retardancy. An amount used exceeding 1 part by weight results in a tendency to degrade the flowability of the flame-retardant resin composition of the present invention in molding and the surface appearance of a molded article and thus is not preferred.

To further increase flowability in molding and improve flame retardancy, the flame-retardant resin composition of the present invention may contain a silicone compound and the like other than the silicone compound of the present invention within the range in which characteristics, such as flame retardancy, of the present invention are not degraded.

The silicone compound refers to a polyorganosiloxane in a broad sense. Examples thereof include (poly)diorganosiloxane compounds, such as dimethylsiloxane and phenylmethylsiloxane; (poly)organosilsesquioxane compounds, such as methylsilsesquioxane and phenylsilsesquioxane; (poly)triorganosilhemioxane compounds, such as trimethylsilhemioxane and triphenylsilhemioxane; copolymers prepared by polymerization thereof; and polydimethylsiloxane and polyphenylmethylsiloxane. When the silicone compound is a polyorganosiloxane, a modified silicone in which the terminus of its molecule is replaced with an epoxy group, a hydroxy group, a carboxyl group, a mercapto group, an amino group, or an ether group is also useful. The form of the silicone compound is not particularly limited. The silicone compound having any form, such as an oily, rubbery, varnish, powdery, or pellet form, may be used.

Furthermore, to enhance the thermal resistance and mechanical strength of the resin composition, the thermoplastic resin composition of the present invention may further contain a reinforcing filler other than the metal silicate compound (D). The reinforcing filler is not particularly limited. Examples thereof include fibrous reinforcements, such as glass fiber, carbon fiber, and metal fiber; metal oxides, such as titanium oxide and iron oxide; and calcium carbonate, glass beads, glass powders, ceramic powders, metal powders, and carbon black. These reinforcing fillers may be used alone. Alternatively, two or more reinforcing fillers that are different in type, particle size or length, surface treatment, and the like may be used in combination.

The reinforcing filler may be subjected to surface treatment in order to enhance adhesiveness to a resin. A surface-treating agent for performing such surface treatment is not particularly limited. An epoxy group-containing silane coupling agent, such as epoxysilane, does not degrade physical properties of the resin and is thus preferred. A surface-treating method is not particularly limited. A common surface-treating method may be used.

In the use of the reinforcing filler, the amount of the reinforcing filler added is 100 parts by weight or less relative to 100 parts by weight of a thermoplastic resin mixture containing 30 to 100 parts by weight of an aromatic polycarbonate or a polyphenylene ether resin (A) and 0 to 70 parts by weight of an aromatic vinyl resin or a thermoplastic polyester resin (B). An amount added exceeding 100 parts by weight results in degradation in impact resistance and results in degradation in moldability and flame retardancy in some cases. The amount added is preferably 50 parts by weight or less and more preferably 10 parts by weight or less. Furthermore, surface properties and dimensional stability of a molded article tend to degrade with increasing amount of reinforcing filler added. Thus, when these properties are important, it is preferred to minimize the amount of the reinforcing filler added.

The flame-retardant resin composition of the present invention may further contain other desirable thermoplastic or thermosetting resin within the range in which properties of the flame-retardant resin composition of the present invention are not degraded. Examples of the thermoplastic or thermosetting resin include polyamide resins, polyphenylene sulfide resins, polyacetal resins, polysulfone resins, polyolefin resins, and rubbery elastomers. These resins may be incorporated alone or in combination of two or more.

Furthermore, to achieve higher performance of the flame-retardant resin composition of the present invention, an antioxidant, such as a phenolic antioxidant or a thioether antioxidant, and a heat stabilizer such as a phosphorus-containing stabilizer may be preferably used alone or in combination of two or more. Moreover, according to need, common additives, such as a stabilizer, a lubricant, a mold-releasing agent, a plasticizer, an ultraviolet-ray absorber, a light stabilizer, a pigment, a dye, an antistatic agent, a conductivity-imparting agent, a dispersant, a compatibilizer, and an antibacterial agent, may be used alone or in combination of two or more.

A method for molding the flame-retardant resin composition prepared in the present invention is not particularly limited. A generally used method for molding a thermoplastic resin, for example, injection molding, blow molding, extrusion molding, vacuum molding, press molding, or calendering, may be employed.

### EXAMPLES

The present invention will be described in detail below by examples. However, the present invention is not limited these examples. Hereinafter, the term "part" means part by weight, and the term "percent" means percent by weight, unless otherwise specified.

### (PRODUCTION EXAMPLE 1): Production of Silicone Compound (C1)

Dichlorodiphenylsilane (468 g), dichlorodimethylsilane (80 g), and an M silicate 51 (291 g, manufactured by Tama Chemicals Co., Ltd.) were weighed into a 5-L flask. After the addition of MIBK (1,200 g), water (336 g) was added dropwise thereto at 10°C or lower. Then, the resulting reaction mixture was heated to 80°C to perform the reaction for 3 hours. After the reaction mixture was cooled to room temperature, chlorotrimethylsilane (268 g) and then water (44 g) were added dropwise, followed by reaction at 60°C for 3 hours. The resulting reaction mixture was washed with water until the mixture was made neutral. The solvent in a separated organic phase was distilled off under reduced pressure to yield a target silicone compound (C1). GPC analysis demonstrated that molecular weights of the product were Mn = 2,660 and Mw = 3,585 (in terms of polystyrene, RI detector). NMR analysis demonstrated that constitutional ratios in average chemical formula (1) were determined to be m = 0.82 and n = 0.60, thus resulting in m + n = 1.42 and n/m = 1.37.

### (PRODUCTION EXAMPLE 2): Production of Silicone Compound (C2)

Methyltrichlorosilane (177 g) and phenyltrichlorosilane (902 g) were weighed into a 5-L flask. After addition of MIBK (2,500 mL), water (1,040 g) was added dropwise thereto at 10°C or lower. After completion of the dropwise addition, trimethylchlorosilane (321 g) was added dropwise. Then, the mixture was stirred at 60°C for 3 hours. The resulting reaction mixture was washed with water until the mixture was made neutral. The solvent in a separated organic phase was distilled off under reduced pressure to yield a target organosiloxane compound (C2). GPC analysis demonstrated that molecular weights of the product were Mn = 3,095 and Mw = 4,762 (in terms of polystyrene, RI detector). NMR analysis demonstrated that constitutional ratios in average chemical formula (1) were determined to be m = 0.61 and n = 0.67, thus resulting in m + n = 1.28 and n/m = 1.10.

### (PRODUCTION EXAMPLE 3): Production of Silicone Compound (C3)

Dichlorodiphenylsilane (253 g), trichlorophenylsilane (179 g), dichlorodimethylsilane (80 g), and an M silicate 51 (291 g, manufactured by Tama Chemicals Co., Ltd.) were weighed into a 5-L flask. After the addition of MIBK (1,200 g), water (395 g) was added dropwise thereto at 10°C or lower. Then, the resulting reaction mixture was heated to 80°C to perform the reaction for 3 hours. After the reaction mixture was cooled to room temperature, chlorotrimethylsilane (317 g) and then water (52 g) were added dropwise, followed by reaction at 60°C for 3 hours. The resulting reaction mixture was washed with water until the mixture was made neutral. The solvent in a separated organic phase was distilled off under reduced pressure to yield a target silicone compound (C3). GPC analysis demonstrated that molecular weights of the product were Mn = 3,229 and Mw = 4,215 (in terms of polystyrene, RI detector). NMR analysis demonstrated that constitutional ratios in average chemical formula (1) were determined to be m = 0.80 and n = 0.57, thus resulting in m + n = 1.37 and n/m = 0.71.

### (PRODUCTION EXAMPLE 4): Production of Silicone Compound (C4)

Trichlorophenylsilane (200 g) and an M silicate 51 (110 g, manufactured by Tama Chemicals Co., Ltd.) were weighed into a 3-L flask. After the addition of MIBK (800 g), water (100 g) was added dropwise thereto at 10°C or lower. Then, the resulting reaction mixture was heated to 80°C to perform the reaction for 3 hours. After the reaction mixture was cooled to room temperature, chlorotrimethylsilane (100 g) and then water (15 g) were added dropwise, followed by reaction at 60°C for 3 hours. The resulting reaction mixture was washed with water until the mixture was made neutral. The solvent in a separated organic phase was distilled off under reduced pressure to yield a target silicone compound (C4). GPC analysis demonstrated that molecular weights of the product were Mn = 2,583 and Mw = 3,355 (in terms of polystyrene, RI detector). NMR analysis demonstrated that constitutional ratios in average chemical formula (1) were determined to be m = 1.07 and n = 0.46, thus resulting in m + n = 1.53 and n/m = 0.43.

### (REFERENCE PRODUCTION EXAMPLE 1): Production of Aromatic Group-Containing Organosiloxane Compound (C5)

Methyltrichlorosilane (637 g) and phenyltrichlorosilane (250 g) were weighed into a 5-L flask. After the addition of MIBK (2,500 mL), water (1,040 g) was added dropwise thereto at 10°C or lower. After completion of the dropwise addition, trimethylchlorosilane (321 g) was added dropwise. The resulting mixture was stirred at 60°C for 3 hours. The resulting reaction mixture was washed with water until the mixture was made neutral. The solvent in a separated organic phase was distilled off under reduced pressure to yield a target organosiloxane compound (C5). NMR analysis demonstrated that constitutional ratios in average chemical formula (1) were determined to be m = 1.10 and n = 0.19, thus resulting in m + n = 1.29 and n/m = 0.17.

### (REFERENCE PRODUCTION EXAMPLE 2): Production of Organosiloxane Compound (C6)

Methyltrichlorosilane (637 g) and dichlorodiphenylsilane (299 g) were weighed into a 6-L flask. After the addition of MIBK (2,500 mL), water (1,040 g) was added dropwise thereto at 10°C or lower. Then, the resulting reaction mixture was heated to 80°C to perform the reaction for 3 hours. The resulting reaction mixture was washed with water until the mixture was made neutral. The solvent in a separated organic phase was distilled off under reduced pressure to yield a target organosiloxane compound (C6). GPC analysis demonstrated that molecular weights of the product was Mn = 2,467 and Mw = 3,535 (in terms of polystyrene, RI detector). NMR analysis demonstrated that constitutional ratios in average chemical formula (1) were determined to be m = 0.60 and n = 0.33, thus resulting in m + n = 0.93 and n/m = 0.55.

Starting materials used in EXAMPLES and COMPARATIVE EXAMPLES are collectively described below.

PC: Bisphenol-A polycarbonate (Toughlon A2200 or FN2200A, manufactured by Idemitsu Petrochemical Co., Ltd.) having viscosity-average molecular weight of 22,000
PPE: Poly(2,6-dimethyl-1,4-phenylene) ether resin (PX100F, manufactured by Mitsubishi Engineering-Plastics Corporation) having an inherent viscosity of 0.50
PS: Polystyrene resin (Estyrene G-13, manufactured by Nippon Steel Chemical Co., Ltd.)
AS: Acrylonitrile-styrene copolymer (Estyrene AS-41, manufactured by Nippon Steel Chemical Co., Ltd.)
HIPS: Butadiene-styrene copolymer (Estyrene H1 H-53, manufactured by Nippon Steel Chemical Co., Ltd.)
PET: Polyethylene terephthalate resin (EFG-70, manufactured by Kanebo Gohsen Ltd.) having an inherent viscosity of 0.70

ABS prepared by the following method was used.

To a reactor equipped with a stirrer, a reflux condenser, an inlet for nitrogen, an inlet for addition of a monomer, and a thermometer, 250 parts by weight of deionized water and 0.5 parts by weight (solid content) of sodium palmitate were fed. The mixture was heated to 70°C under a nitrogen stream with stirring. After the temperature reached 70°C, 0.4 parts by weight of sodium formaldehyde sulfoxylate, 0.01 parts by weight of disodium ethylenediaminetetraacetate, and 0.0025 parts by weight of ferrous sulfate (heptahydrate) were added thereto. Then, a mixture of 28 parts by weight of acrylonitrile, 72 parts by weight of styrene, 0.2 parts by weight of cumene hydroperoxide, and 0.3 parts by weight of tert-dodecyl mercaptan was continuously added dropwise over 8 hours, during which 0.5 parts by weight (solid content) of sodium palmitate was respectively added at after 1.5 hours and at after 3 hours. Upon completion of the addition, the mixture was stirred at 70°C for 2 hours. Then, the polymerization was terminated to obtain a polymer (ABS-1) latex. The polymerization conversion was 98%.

To a 100-L pressure-proof polymerization reactor, 200 parts by weight of deionized water was fed. The reactor was evacuated, and nitrogen was introduced into the reactor. Then, 100 parts by weight of butadiene, 0.3 parts by weight of potassium resinate, 0.1 parts by weight of sodium resinate, 0.05 parts by weight of sodium carbonate, and 0.2 parts by weight of potassium persulfate were fed thereto. The mixture was heated to 60°C to initiate polymerization. The polymerization was continued for 30 hours. The resulting diene rubber polymer latex had a volume-average particle size of 0.2312 µm. The polymerization conversion was 95%.

Subsequently, 250 parts by weight of deionized water and 70 parts by weight (in terms of the solid content) of the above-described diene rubber polymer latex were fed to a reaction vessel equipped with a stirrer, a reflux condenser, an inlet for nitrogen, an inlet for addition of a monomer, and a thermometer. The mixture was heated to 65°C under a nitrogen stream with stirring. After the addition of 0.2 parts by weight of sodium formaldehyde sulfoxylate, 0.01 parts by weight of disodium ethylenediaminetetraacetate, and 0.0025 parts by weight of ferrous sulfate (heptahydrate), a mixture of 8 parts by weight of acrylonitrile, 22 parts by weight of styrene, and 0.3 parts by weight of cumene hydroperoxide was continuously added dropwise over 5 hours. Upon completion of the addition, the mixture was stirred at 65°C for 2 hours. The polymerization was terminated to obtain a diene rubber-containing graft copolymer (ABS-2) latex. The polymerization conversion was 98%.

The resulting diene rubber-containing graft copolymer (ABS-2) latex and the above-described polymer (ABS-1) latex were mixed at an ABS-2 latex to ABS-1 latex ratio of 20:80. After the addition of 0.5 parts by weight of a phenolic antioxidant (AO-50, manufactured by Adeka Corporation), a 5 wt% aqueous solution of 3 parts by weight of calcium chloride was added to prepare a coagulated slurry. The coagulated slurry was heated to 95°C, cooled to 50°C, dehydrated, and dried to prepare a powdery ABS resin.

Silicone compound (C7): Octaphenylsilsesquioxane (MS0840, manufactured by Hybrid Plastics Inc.)
Metal silicate compound
(D1): Talc (SG-200, manufactured by Nippon Talc Co., Ltd., pH = 9.3, SiO₂ unit content = 60 wt%, average particle size = 3.2 µm)
(D2): Mica (A-21S, manufactured by Yamaguchi Mica Co., Ltd., pH = 8.0, SiO₂ unit content = 45 wt%, average particle size = 22.5 µm)
(E) Fluorocarbon resin: tetrafluoroethylene (Polyflon FA-500, manufactured by Daikin Industries, Ltd.) (hereinafter, abbreviated as "PTFE")

### (EXAMPLE 1)

### Preparation of Resin Composition

First, 90 parts by weight of a polycarbonate resin, 10 parts by weight of a polystyrene resin, 5 parts by weight of the flame retardant (C1) for addition to a resin, the flame retardant (C1) being prepared by PRODUCTION EXAMPLE 1, 5 parts by weight of talc (D1), 0.1 parts by weight of a phosphorus-containing stabilizer (trade name: ADK STAB HP-10, manufactured by Adeka Corporation), 0.1 parts by weight of a phenolic stabilizer (trade name: ADK STAB AO-60, manufactured by Adeka Corporation), and 0.2 parts by weight of PTFE were dry-blended in advance. The mixture was fed to a vented twin-screw extruder (trade name: TEX44, manufactured by The Japan Steel Works, LTD.) through a hopper thereof, the extruder having a cylinder with a temperature of 270°C, and melt-extruded, thereby producing a resin composition.

### Preparation of Test Piece

The resulting pellets were dried at 120°C for 5 hours. The dry pellets were molded with a 35-t injection molding machine at a cylinder temperature of 295°C and a die temperature of 50°C to form 1.6-mm-thick bars each measuring 12 mm in width and 127 mm in length. The following evaluation was made. Table 1 shows the results.

### Evaluation method

Evaluation of flame retardancy was performed in accordance with the UL-94 V test to determine the total combustion time in seconds.

### (EXAMPLES 2 to 32 and COMPARATIVE EXAMPLES 1 to 17)

Resin compositions were prepared as in EXAMPLE 1, except that types of resins; silicone compounds, and inorganic silicate compounds and amounts added were changed. The resulting pellets were formed into test pieces in the same way as above. The test pieces were evaluated in accordance with the above-described evaluation method. Tables 1 to 6 show the evaluation results.

**Table 1**

| | | EXAMPLE | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Aromatic polycarbonate | PC | 90 | 90 | 90 | 90 | 90 | 90 | 90 | 90 | 90 | 90 | 90 |
| Aromatic vinyl resin | PS | 10 | | | | | 15 | | 10 | | 10 | |
| | AS | | 10 | | | | | | | | | |
| | ABS | | | 10 | | 10 | | 15 | | 10 | | 10 |
| | HIPS | | | | 10 | | | | | | | |
| Silicone compound | C1 | 5 | 5 | 5 | 5 | 5 | 5 | 5 | | | 5 | 5 |
| | C2 | | | | | | | | 5 | 5 | | |
| Metal silicate | D1 | 5 | 5 | 5 | 5 | 5 | 5 | 5 | 5 | 5 | | |
| | D2 | | | | | | | | | | 10 | 10 |
| Total combustion time in second (sec) | | 43 | 42 | 39 | 45 | 119 | 165 | 171 | 45 | 46 | 79 | 82 |

**Table 2**

| | | EXAMPLE | | | | | | | | | |
|---|---|---|---|---|---|---|---|---|---|---|---|
| | | 12 | 13 | 14 | 15 | 16 | 17 | 18 | 19 | 20 | 21 |
| Aromatic polycarbonate | PC | 80 | 80 | 80 | 80 | 80 | 80 | 80 | 80 | 70 | 70 |
| Thermoplastic polyester | PET | 20 | 20 | 20 | 20 | 20 | 20 | 20 | 20 | 30 | 30 |
| Silicone compound | C1 | 3 | 3 | 4 | 4 | 4 | 4 | | | 4 | 4 |
| | C2 | | | | | | | 3 | 4 | | |
| Metal silicate | D1 | 1 | 3 | 1 | 3 | | | 1 | | 3 | |
| | D2 | | | | | 1 | 3 | | 3 | | 3 |
| Total combustion time in second (sec) | | 152 | 101 | 77 | 50 | 102 | 78 | 143 | 55 | 88 | 95 |

**Table 3**

| | | EXAMPLE | | | | | | | | | | |
|---|---|---|---|---|---|---|---|---|---|---|---|---|
| | | 22 | 23 | 24 | 25 | 26 | 27 | 28 | 29 | 30 | 31 | 32 |
| Polyphenylene ether resin | PPE | 80 | 80 | 80 | 80 | 80 | 80 | 80 | 80 | 70 | 70 | 70 |
| Aromatic vinyl resin | PS | 20 | 20 | 20 | 20 | 20 | 20 | | | 30 | 30 | |
| | HIPS | | | | | | | 20 | 20 | | | 30 |
| Silicone compound | C1 | | | | | | 6 | | 6 | 6 | 6 | |
| | C3 | 3 | 3 | 3 | 6 | | | | | | | |
| | C4 | | | | | 6 | | 6 | | | | 6 |
| Metal silicate | D1 | 1 | 5 | | | 5 | 5 | | 5 | 5 | | |
| | D2 | | | 1 | 5 | | | | | | 5 | 5 |
| Total combustion time in second (sec) | | 75 | 67 | 68 | 44 | 42 | 40 | 43 | 42 | 49 | 50 | 51 |

**Table 4**

| | | COMPARATIVE EXAMPLE | | | | | |
|---|---|---|---|---|---|---|---|
| | | 1 | 2 | 3 | 4 | 5 | 6 |
| Aromatic polycarbonate | PC | 90 | 85 | 85 | 90 | 90 | 90 |
| Aromatic vinyl resin | PS | | 15 | | | | |
| | AS | | | | | | 10 |
| | ABS | 10 | | 15 | 10 | 10 | |
| | HIPS | | | | | | |
| Silicone compound | C1 | 5 | 5 | 5 | | | |
| | C5 | | | | | | 5 |
| Metal silicate | D1 | | | | 5 | | 5 |
| | D2 | | | | | 10 | |
| Total combustion time in second (sec) | | 165 | 237 | 265 | 423 | 247 | 268 |

**Table 5**

| | | COMPARATIVE EXAMPLE | | | | | |
|---|---|---|---|---|---|---|---|
| | | 7 | 8 | 9 | 10 | 11 | 12 |
| Aromatic polycarbonate | PC | 80 | 70 | 80 | 80 | 80 | 80 |
| Thermoplastic polyester | PET | 20 | 30 | 20 | 20 | 20 | 20 |
| Silicone compound | C1 | 3 | 3 | | | | |
| | C5 | | | | | 3 | 4 |
| Metal silicate | D1 | | | 1 | 3 | 1 | |
| | D2 | | | | | | 3 |
| Total combustion time in second (sec) | | 228 | 342 | 388 | 354 | 247 | 186 |

**Table 6**

| | | COMPARATIVE EXAMPLE | | | | |
|---|---|---|---|---|---|---|
| | | 13 | 14 | 15 | 16 | 17 |
| Polyphenylene ether resin | PPE | 80 | 80 | 80 | 80 | 80 |
| Aromatic vinyl resin | PS | 20 | 20 | | 20 | 20 |
| | HIPS | | | 20 | | |
| Silicone compound | C1 | 3 | | | | |
| | C6 | | | | 5 | |
| | C7 | | | | | 3 |
| Metal silicate | D1 | | 5 | | 5 | 5 |
| | D2 | | | 5 | | |
| Total combustion time in second (sec) | | 150 | 211 | 230 | 129 | 163 |

As shown in Tables 1 to 6, highly satisfactory flame retardancy was observed in all of EXAMPLES. The resin compositions were self-extinguished in a short period of time.

In each of COMPARATIVE EXAMPLES 1 to 17, since the silicone compound or the metal silicate compound alone was incorporated, flame retardancy was insufficient. Furthermore, since the silicone compound different from that of the present invention was used, the effect of imparting flame retardancy was insufficient.

As shown in Table 1 to 6, an excellent flame-retardant resin composition can be provided by preparing any composition of the present invention.

## Claims

1. A flame-retardant resin composition comprising 0.1 to 20 parts by weight of a silicone compound (C) represented by average chemical formula (1):
R¹ₘR²ₙSiO_{(4-m-n)/2} (1)
(wherein R¹ represents a monovalent aliphatic hydrocarbon group having 1 to 4 carbon atoms; R² represents a monovalent aromatic hydrocarbon group having 6 to 24 carbon atoms; there may be two or more R¹s and two or more R²s; and m and n each represent a value satisfying expressions: 1.1 ≤ m + n ≤ 1.7, and 0.4 ≤ n/m ≤ 2.5); 0.1 to 20 parts by weight of a metal silicate (D) having a pH of 8.0 or more, containing 30 percent by weight or more of a SiO₂ unit, and having an average particle size in the range of 1 nm to 100 µm, relative to 100 parts by weight of a thermoplastic resin mixture containing 30 to 100 parts by weight of an aromatic polycarbonate or a polyphenylene ether resin (A) and 0 to 70 parts by weight of an aromatic vinyl resin or a thermoplastic polyester resin (B).

2. The flame-retardant resin composition according to claim 1, further comprising 0.005 to 1 part by weight of a fluorocarbon resin (E).

3. The flame-retardant resin composition according to claim 1 or 2, wherein the silicone compound (C) contains 20% or more of an R³SiO_{3/2} unit (wherein R³ is selected from the group consisting of an alkyl group having 1 to 4 carbon atoms and an aromatic group having 6 to 24 carbon atoms and may be same or different) and/or a SiO₂ unit relative to the total Si atoms.

4. The flame-retardant resin composition according to any one of claims 1 to 3, wherein the silicone compound (C) contains 10 mol% or more of the SiO₂ unit relative to the total Si atoms.

5. The flame-retardant resin composition according to any one of claims 1 to 4, wherein the main chain skeleton of the silicone compound (C) consists of the R³SiO_{3/2} unit (wherein R³ is selected from the group consisting of an alkyl group having 1 to 4 carbon atoms and an aromatic group having 6 to 24 carbon atoms, and multiple R³s may be the same or different) and the SiO₂ unit.

6. The flame-retardant resin composition according to any one of claims 1 to 4, wherein the main chain skeleton of the silicone compound (C) consists of an R²SiO_{2/2} unit (wherein R³ is selected from the group consisting of an alkyl group having 1 to 4 carbon atoms and an aromatic group having 6 to 24 carbon atoms, and multiple R³s may be the same or different) and the SiO₂ unit.

7. The flame-retardant resin composition according to any one of claims 1 to 6, wherein the silicone compound (C) has a number-average molecular weight of 1,000 to 200,000.

8. The flame-retardant resin composition according to any one of claims 1 to 7, wherein the metal silicate compound (D) contains at least one metal element selected from K, Na, Li, Ca, Mn, Fe, Ni, Mg, Fe, Al, Ti, Zn, and Zr.
